# EUROPÄISCHE PATENTSCHRIFT

(11) **EP 3 266 537 B1**
(45) Veröffentlichungstag und Bekanntmachung des Hinweises auf die Patenterteilung: **02.02.2022**
(21) Anmeldenummer: 17184225.5
(22) Anmeldetag: 23.12.2014
(51) Int. Cl.: B22D 11/04, B22D 11/041, B22D 11/111, B22D 11/115, B22D 11/12, B22D 11/14, B22D 23/10, C22B 9/18

(54) **VERFAHREN UND ANLAGE ZUR HERSTELLUNG VON LANGEN GUSSBLOECKEN GROSSEN QUERSCHNITTS**
METHOD AND PLANT FOR THE PRODUCTION OF LONG INGOTS HAVING A LARGE CROSS-SECTION
PROCÉDÉ ET INSTALLATION DE PRODUCTION DE LINGOTS DE GRANDE LONGUEUR ET DE FORTE SECTION

(30) Priorität: 30.12.2013 AT 9922013
(43) Veröffentlichungstag der Anmeldung: 10.01.2018
(62) Teilanmeldung aus: 14828466.4
(73) Patentinhaber: INTECO special melting technologies GmbH, 8600 Bruck a.d. Mur (AT)
(72) Erfinder: Holzgruber, Harald, 8600 Bruck a.d. Mur (AT); Ghasemipour, Rezvan, 2381 Laab im Walde (AT); Rumpler, Heinz, 8713 St. Stefan ob Leoben (AT); Michelic, Sebastian, 8793 Trofaiach (AT); Pierer, Robert, 8670 Krieglach (AT)
(74) Vertreter: Patent- und Rechtsanwälte Behrmann Wagner PartG mbB

(56) Entgegenhaltungen:
- JP-A- H07 144 255
- KR-A- 20100 085 748
- KR-A- 20110 074 153

## Beschreibung

### Stand der Technik

Bei der vorliegenden Erfindung betrifft ein Verfahren zur Herstellung von Gussblöcken mit großen Querschnitten und Längen, die über die im konventionellen Blockguss in Kokillen üblichen deutlich hinausgehen unter teilweiser Verwendung bekannter Technologien und vorteilhafter Ausnützung ihrer Merkmale. Ziel ist es, beispielsweise Rundblöcke oder auch Polygonal-, Quadrat- oder Rechteckformate herzustellen mit Durchmessern für Rundblöcke im Bereich von über 300mm bzw. äquivalenten Querschnitts bei anderen Querschnittformen und Längen von über 5m.

Zwar ist die Herstellung von großen weitgehend zylindrischen Rundblöcken mit 600mm und darüber und Blocklängen bis zu 5m oder etwas mehr durch Gießen in Graugusskokillen bekannt, wobei als wesentliche Probleme ein Hängenbleiben des Gussblocks in der Kokille beim Strippen desselben wie auch eine unzureichende Erstarrungsstruktur im Kern mit Seigerungen, Fehlstellen und Lunker, neben anderen anzumerken sind.

Derartige lange, weitgehend zylindrische Blöcke werden vorzugsweise in Ringwalzwerken verwendet, wo sie auf kurze Blockscheiben abgelängt und vor dem Einsatz im Ringwalzwerk gelocht werden, sodass der qualitativ unzureichende Zentrumsbereich entfernt wird. Die Verwendung derartiger Blöcke für andere Produkte ist aber aufgrund der unzureichenden Qualität des Blockzentrums nur eingeschränkt möglich.

Auch ist die Lebensdauer der Graugusskokillen beschränkt und stellt somit einen nicht unerheblichen Kostenfaktor dar.

Es sind auch Anlagen zum Stranggießen großer Querschnitte mit 600mm und 800mm Durchmesser bekannt. Die Schwierigkeit liegt hier darin, dass die Anlagen um extreme Bauhöhen zu vermeiden als Bogenanlage ausgeführt werden müssen, um die bei üblichen Gießgeschwindigkeiten von 0,15m/min. bis 0,30m/min. auftretenden Sumpflängen im Bereich von 25m bis 30m annähernd beherrschen zu können. Bei üblichen Gießzeiten von max. 90min. können somit beispielsweise pro Strang maximal 22m Strang im Falle einer Gießabmessung von 600mm rund oder 50t erzeugt werden, wobei der Strang bei Gießende bei einer Erstarrungszeit von ca. 115min. noch nicht einmal bis zum Stranganfang durcherstarrt ist. Der Strang muss also teilerstarrt ausgefördert und gerichtet werden.

Der Ablauf der Erstarrung im Gießbogen und zum Teil in der Horizontalen haben eine exzentrische Resterstarrung u.a. mit einer Anhäufung von Seigerungen und Einschlüssen zur Folge, sodass derartige Gussprodukte ebenfalls nur bedingt für hochwertige Produkte verwendet werden können.

Längere Stränge mit entsprechend längeren Gießzeiten können dann erzeugt werden, wenn ein Zwischengefäß ausreichenden Volumens vorhanden ist und ein Pfannenwechsel vorgenommen werden kann oder eine Pfannenbeheizung mittels Elektroden oder Plasmabrenner zur Verfügung stehen.

Die großen Sumpflängen, wie oben angeführt, bedingen große Gießradien von bis zu 18m, um eine Durcherstarrung des großen Querschnitts bis zum Ende der Treib-Richtstrecke und Beginn der Schneidstrecke zu gewährleisten.

In jedem Fall bedingt das kontinuierliche Gießen großer Querschnitte in Bogenanlagen aufgrund der hohen Stranggewichte eine aufwendige Konstruktion des Stützrollenkorsetts der Anlage sowie den Einsatz eines ebenfalls aufwendigen Treib-Richtgerüstes, um den Strang mit einer präzise kontrollierten Geschwindigkeit abzuziehen und den großen Querschnitt gerade zu richten.

Derartige Anlagen bedingen daher hohe Investitionskosten, die vor allem dann nicht oder kaum amortisiert werden können, wenn deren hohe Kapazität nicht ausgenützt werden kann.

Eine Einstrang-Anlage für einen Querschnitt von 600mm rund hat eine Gießleistung von etwa 550kg/min. oder 33t/h, kann also eine 50t Schmelze in 1,5h vergießen. Rechnet man mit Rüstzeiten von 2,5h, kann eine derartige Anlage bei 6000h Betriebszeit ca. 75.000t im Jahr erzeugen. Bei Pfannenwechsel und längeren Gießzeiten entsprechend mehr. Oft werden nur 20.000t bis 25.000t derartiger Produkte benötigt. Auf der Grundlage dieser Mengen kann aber eine Amortisation einer solchen Anlage nicht dargestellt werden.

Werden noch größere Querschnitte benötigt wie beispielsweise 800mm oder 1000mm rund, so werden die Verhältnisse noch ungünstiger.

Ein weiterer Nachteil des Stranggießens von großen Querschnitten ist, dass es nach Gießende zur Ausbildung von tiefreichenden Primärlunkern kommt, wodurch das Ausbringen negativ beeinflusst wird.

Aus der JP H07 144255 A ist ein Verfahren zur Herstellung von Gussblöcken mit den Merkmalen des Oberbegriffs des Anspruchs 1 bekannt. Ferner ist es aus der KR 2011 0074153 A bekannt, einen elektromagnetischen, verfahrbaren Rührer zu verwenden. Dieser wird nach dem Abzug des Gussblocks aus der Kokille vom Kopfbereich des Gussblocks nach in Richtung des Fußes des Gussblocks bewegt.

### Offenbarung der Erfindung

Aufgabe der Erfindung ist es, die oben geschilderten Nachteile zu vermeiden und eine wirtschaftliche Erzeugung auch geringer Mengen von Blöcken mit 300mm Durchmesser und darüber und Blocklängen von mehr als 5m zu ermöglichen und gleichzeitig das Qualitätsniveau im Vergleich zu den oben beschriebenen bekannten Verfahren zu verbessern.

Diese Aufgabe wird erfindungsgemäß bei einem Verfahren mit den kennzeichnenden Merkmalen des Anspruchs 1 gelöst. Das erfindungsgemäße Verfahren schlägt hierzu vor, den elektromagnetischen, verfahrbaren Rührer nach Ende des regulären Gießvorgangs während der Nachgießphase vom untersten Bereich des Gussblocks kontinuierlich in Richtung zum Kopfende des Gussblocks zu bewegen.

Vorteilhafte Weiterbildungen des erfindungsgemäßen Verfahrens sind in den Unteransprüchen aufgeführt.

Der aus der Kokille abgezogene Strang wird in einer Sekundärkühlzone durch Sprühwasser, Sprühnebel oder Pressluft während des Blockabzugs und auch nach Beendigung derselben gekühlt. Nach Beendigung des Gießvorgangs und Blockabzugs kann die Sekundärkühlung maximal bis zur vollständigen Erstarrung in reduziertem Umfang fortgesetzt werden, wobei jedoch weiter flüssiger Stahl zugeführt wird entweder mit im Vergleich zum Gießvorgang deutlich verringerter Gießgeschwindigkeit oder durch Abschmelzen einer selbstverzehrenden Elektrode, sodass mindestens die bei der Erstarrung auftretende Schrumpfung ausgeglichen wird.

Die Nachlieferung geschmolzenen Materials kann nach Ende des Gießvorgangs beispielsweise dadurch erfolgen, dass nach Entfernen der Gießpfanne und eines allenfalls verwendeten Zwischengefäßes der Gießspiegel in der Kokille mit einer metallurgisch wirksamen Schlackenschicht abgedeckt wird und durch Abschmelzen einer selbstverzehrenden Elektrode nach dem Elektroschlacke-Umschmelz-Verfahren so lange beheizt wird bis der gesamte Gießquerschnitt erstarrt ist. Dabei ist es wesentlich, dass unmittelbar nach Gießende mit hohen Abschmelzraten in kg/h im Bereich zwischen dem 0,5- bis 2,5-fachen des Blockdurchmessers in mm beheizt wird. Anstelle des Blockdurchmessers wird bei Quadratblöcken zur Bestimmung der Abschmelzrate die Seitenlänge und Rechteckformaten die Hälfte der Summe aus Schmal- und Längsseite eingesetzt.

Die verwendeten Abschmelzelektroden sollen dabei hinsichtlich ihrer chemischen Zusammensetzung im Wesentlichen der Zusammensetzung des Gussblocks entsprechen.

Die Beheizung wird vorzugsweise während des gesamten Erstarrungsvorgangs aufrechterhalten, wobei die Abschmelzrate schrittweise oder kontinuierlich bis zum Ende der Erstarrung auf 5 - 10% des Anfangswertes abgesenkt wird.

Die abgeschmolzene Metallmenge soll dabei mindestens 2% bis max. 10% des Gesamtgewichts des Blocks entsprechen.

Eine Nachlieferung geschmolzenen Materials nach Beendigung des regulären Gießvorgangs und Beendigung des Blockabzugs kann auch mit einer mindestens um den Faktor 10 verringerten Gießrate erfolgen, wobei diese Nachgießrate bis zum Ende der Erstarrung auf 10% der Rate bei Beginn des Nachgießens reduziert wird, so dass der Metallspiegel in der Kokille nur geringfügig ansteigt.

Die Versorgung mit zusätzlichem flüssigen Material kann auch dadurch erreicht werden, dass nach Beendigung des Blockabzugs der Gießvorgang mit höchstens der regulären Gießrate fortgesetzt wird, sodass der Metallspiegel in der Kokille ansteigt bis über den oberen Kokillenrad hinweg in einen auf der Kokille aufsitzenden keramisch ausgemauerten, isolierten Aufsatz bis eine zusätzliche Hohe von max. 10% der regulär gegossenen Blocklänge erreicht ist. Um eine vorzeitige Erstarrung des flüssigen Metalls im Aufsatz zu vermeiden kann der Aufsatz zusätzlich beheizt werden.

### Beschreibung von Ausführungsbeispielen

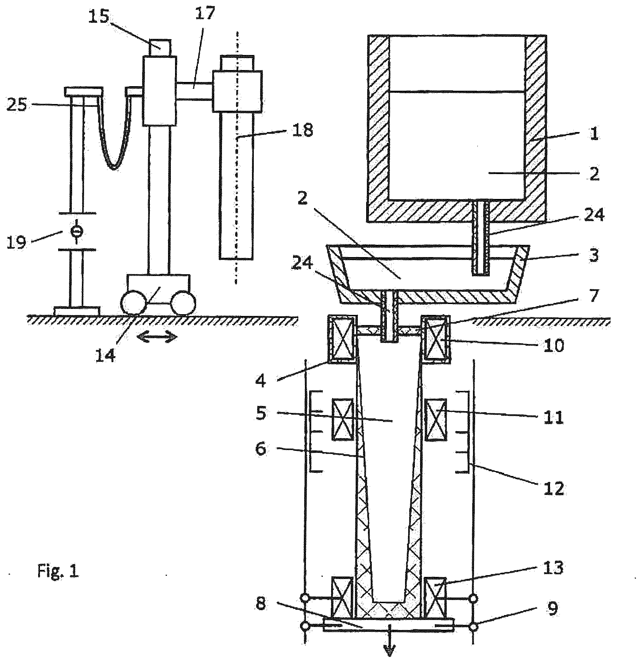

In der Fig. 1 ist eine für die Durchführung des erfindungsgemäßen Verfahrens geeignete Anlage während des regulären Gießvorgangs schematisch dargestellt. Das in einer ausgemauerten Gießpfanne 1 enthaltene flüssige Metall 2, vorzugsweise flüssiger Stahl, gelangt über ein ebenfalls ausgemauertes Zwischengefäß 3 in die kurze wassergekühlte oszillierende Kokille 4, die mit einem Kokillenrührer 10 versehen sein kann in den flüssigen Metallsumpf 5, der von der sich bildenden erstarrten Strangschale des Gießblockes 6 eingeschlossen wird.

Der Metallspiegel in der Kokille 4 wird üblicherweise durch Gießpulver 7 abgedeckt. Es ist auch möglich, dass die Metallzufuhr zur Kokille 4 direkt von der Gießpfanne 1 erfolgt und auf ein Zwischengefäß 3 verzichtet wird. Zum Schutz vor Oxidation wird das flüssige Metall 2 durch sogenannte keramische Schattenrohre 24 geführt.

Der auf einer Bodenplatte 8 mit einem Abzugsmechanismus 9 aufsitzende sich bildende Gussblock 6 wird entsprechend der Gießgeschwindigkeit solange nach unten abgezogen, bis die gewünschte oder aufgrund der Anlagenauslegung max. mögliche Blocklänge erreicht ist.

Neben einem wahlweise vorsehbaren elektromagnetischen Kokillenrührer 10 kann auch ein elektromagnetischer Rührer 11 unterhalb der Kokille 4 im Bereich der Sekundärkühlzone 12 eingesetzt werden.

Weiterhin kann ein in vertikaler Richtung verfahrbarer elektromagnetischer Rührer 13 während des Gießvorgangs mit der Bodenplatte 8 nach unten bewegt werden und nach Beendigung des Absenkvorgangs mit fortschreitender Erstarrung entlang des Gussblocks 6 nach oben bewegt werden.

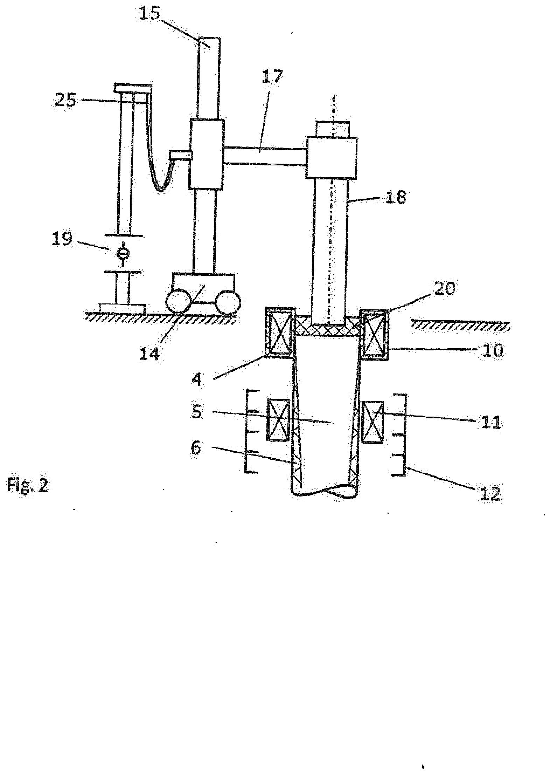

In der Fig. 1 ist weiterhin eine Elektroschlacke-Heizanlage in Warteposition gezeigt, die nach Beendigung des Gießvorgangs in die Schmelz-, Gießposition gefahren werden kann. Die Anlage besteht aus einer Verfahrvorrichtung 14, die auch als Schwenkvorrichtung ausgeführt sein kann. Diese trägt einen Mast 15 entlang dessen ein Elektrodenwagen 16 verfahrbar angeordnet ist, der seinerseits in einem Elektrodentragarm 17 eine verzehrbare Abschmelzelektrode 18 trägt. Anstelle einer Abschmelzelektrode kann auch eine nicht verzehrbare Graphitelektrode eingesetzt werden. Die Anlage ist über in Fig. 2 gezeigte Hochstromschienen 17 und flexible Hochstromkabel 25 mit einer Wechselstrom- oder Gleichstromquelle 19 verbunden.

Die Fig. 2 zeigt eine erfindungsgemäße Anlage, in welcher der Gussblock 6 nach Beendigung des regulären Gießvorgangs nach dem Elektroschlackeverfahren nach Aufbringen eines metallisch aktiven Schlackenbads 20 durch Abschmelzen einer verzehrbaren Elektrode 18 einerseits beheizt wird und andererseits flüssiges Material in den Schmelzsumpf 5 nachgespeist wird.

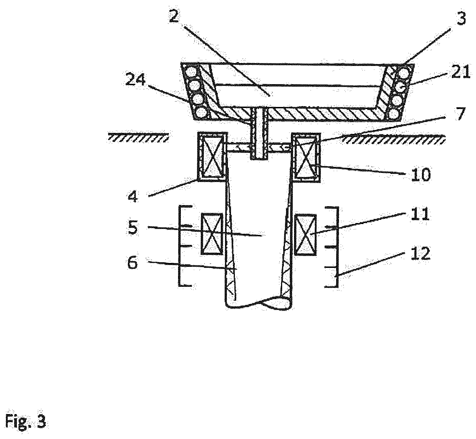

In der Fig. 3 ist eine erfindungsgemäße Anlage mit einem Zwischengefäß 3 gezeigt, welches beispielsweise über eine eingebaute Induktionsspule 21 beheizbar ist.

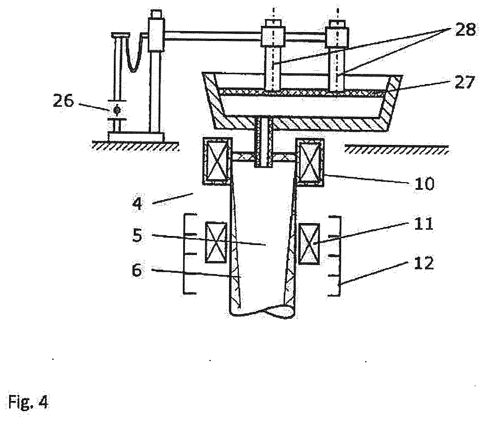

Die Fig. 4 zeigt eine erfindungsgemäße Anlage mit einem Zwischengefäß 3, welches nach dem Elektroschlackeheizverfahren nach Aufbringen eines metallisch aktiven Schlackenbads 27 durch Elektroden 28, welche durch eine Stromquelle 26 elektrisch versorgt werden, beheizt wird.

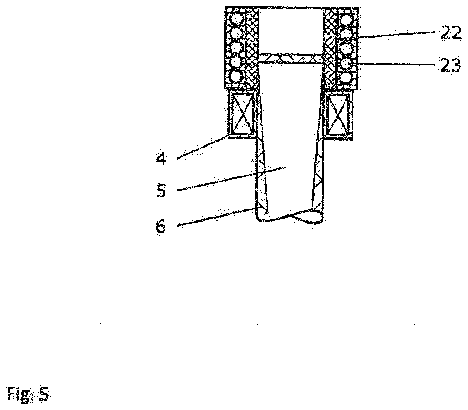

Die Fig. 5 zeigt den Kokillenteil einer erfindungsgemäßen Anlage, auf welchen ein keramischer, isolierender Aufsatz 22 aufsitzt, der nach Erreichen der vorgesehenen Blocklänge und Beendigung des Blockabzugs durch Fortsetzen des Gießvorgangs mit flüssiger Schmelze gefüllt wurde, die durch eine beispielsweise induktive Beheizung 23 warm gehalten werden kann.

## Patentansprüche

1. Verfahren zur Herstellung von Gussblöcken (6) aus Metallen, insbesondere aus Stahl mit Querschnittsflächen von mindestens 0,10 m², vorzugsweise runder aber auch quadratischer oder rechteckiger Form durch Vergießen einer Metall- bzw. Stahlschmelze entweder direkt aus der Gießpfanne (1) oder über ein feuerfest ausgemauertes Zwischengefäß (3) in an sich bekannter Weise in eine kurze, wassergekühlte, nach unten offene Kokille (4) und Abzug des erstarrenden Gussblocks (6) aus derselben mittels eines nach unten beweglichen Abzugstempels (8), wobei der Gießvorgang mit einer dem Gießquerschnitt entsprechenden festgelegten Gießrate solange fortgesetzt wird, bis die gewünschte oder maximale durch die Hubhöhe des Abzugsstempels (8) bestimmte Blocklänge erreicht ist und nach Ende des regulären Gießvorgangs weiter flüssiges Metall in einem Ausmaß zugeführt wird, sodass mindestens die bei der Erstarrung auftretende Schrumpfung der Metall- bzw. Stahlschmelze ausgeglichen wird,
**dadurch gekennzeichnet,**
**dass** nach Ende des regulären Gießvorgangs, während der Nachgießphase, beginnend in der untersten Position des Gussblocks (6), der Metallsumpf (5) durch einen elektromagnetischen, vertikal verfahrbaren Rührer (13) gerührt wird und der Rührer (13) mit fortschreitender Erstarrung kontinuierlich zum Kopfende des Gussblocks (6) hin verfahren wird

2. Verfahren nach Anspruch 1, **dadurch gekennzeichnet, dass** der aus der Kokille (4) abgezogene Gussblock (6) während des Gießvorgangs durch eine Sekundärkühlzone (12) geführt wird, wo er durch Sprühwasser, Sprühnebel oder Pressluft gekühlt werden kann, und dass diese Kühlung während der Resterstarrungsphase nach Ende des Gießvorgangs und Beendigung des Blockabzugs schrittweise oder kontinuierlich reduziert wird.

3. Verfahren nach den Ansprüchen 1 und 2, **dadurch gekennzeichnet, dass** unmittelbar nach Ende des Gießvorgangs die Gießpfanne (1) und/oder das Verteilergefäß (3) entfernt werden/wird, der Gießspiegel in der Kokille (4) durch eine metallurgisch wirksame flüssige Schlackenschicht (7) abgedeckt wird, und durch Abschmelzen einer verzehrbaren Elektrode (18) nach dem Elektroschlacke-Verfahren so lange beheizt wird, bis der gesamte Gießquerschnitt der Metall- bzw. Stahlschmelze erstarrt ist.

4. Verfahren nach Anspruch 3, **dadurch gekennzeichnet, dass** die Abschmelzrate der selbstverzehrenden Elektrode (18) zu Beginn des Elektroschlacke-Heizvorgangs in kg/h zwischen dem 0,5 und 2,5-fachem des Blockdurchmessers oder der Seitenlänge bei Quadratblöcken beziehungsweise der Hälfte der Summe aus Schmal- und Längsseite bei Rechteckformaten in mm gewählt, wird und dass die Abschmelzrate während des Erstarrungsvorgangs bis zu dessen Ende kontinuierlich oder schrittweise auf 10 - 15 % des Anfangswertes abgesenkt wird.

5. Verfahren nach den Ansprüchen 3 und 4, **dadurch gekennzeichnet, dass** die verwendete Abschmelzelektrode (18) hinsichtlich ihrer chemischen Zusammensetzung der chemischen Zusammensetzung des Gussblocks (6) entspricht.

6. Verfahren nach einem der Ansprüche 3 bis 5, **dadurch gekennzeichnet, dass** die während der Erstarrung abgeschmolzene Menge 2 - 10 % des Gesamtgewichts des Gussblocks (6) entspricht.

7. Verfahren nach den Ansprüchen 1 und 2, **dadurch gekennzeichnet, dass** nach Beendigung des regulären Gießvorgangs und Beendigung des Blockabzugs der Gießvorgang mit einer um mindestens den Faktor 10 verringerten Gießrate aus der beheizbaren Gießpfanne (1) oder dem beheizbaren Zwischengefäß (3) oder einem Verteilergefäß (21) fortgesetzt wird und schrittweise oder kontinuierlich bis zum Ende der Erstarrung auf 10 % der Rate bei Beginn des Nachgießens reduziert wird.

8. Verfahren nach Anspruch 1 oder 2, **dadurch gekennzeichnet, dass** nach Beendigung des regulären Gießvorgangs und Beendigung des Blockabzugs der Gießvorgang mit höchstens der regulären Gießgeschwindigkeit fortgesetzt wird, sodass der Spiegel des Metalls in der Kokille (4) bis über den Kokillenrand hinweg ansteigt, bis in einen auf der Kokille (4) aufsitzenden keramisch ausgemauerten, isolierten Aufsatz (22) eine zusätzliche Höhe von max. 10% der Blocklänge erreicht ist.

9. Verfahren nach Anspruch 8, **dadurch gekennzeichnet, dass** der keramisch ausgemauerte, isolierte Aufsatz (22) zusätzlich beheizt wird.

## Claims

1. A method for producing ingots (6) from metal, in particular from steel, having cross-sectional areas of at least 0.10 m², of a preferably round but also square or rectangular shape, by casting metal or steel melt in a manner known per se, either directly from a casting ladle (1) or via a tundish (3) lined with a fireproof material, into a short water-cooled ingot mold (4) open at the bottom and withdrawing the solidifying ingot (6) from the same using a downwardly movable withdrawing tool (8), the casting process being continued with a set casting rate corresponding to the casting cross-section until the desired or maximum ingot length determined by the height of lift of the withdrawing tool (8) is reached, and liquid metal continuing to be fed after the end of the regular casting process in such an amount that at least the diminution of the metal or steel melt occurring during solidification is made up for,
**characterized in that**
after completion of the regular casting process, during the makeup casting phase, starting in the lowest position of the ingot (6) the metal pool (5) is stirred by an electromagnetic stirrer (13) which is vertically displaceable and the stirrer (13) is displaced continuously towards the head end of the ingot (6) as the solidification progresses.

2. The method according to claim 1, **characterized in that** during the casting process, the ingot (6) withdrawn from the ingot mold (4) is guided through a secondary cooling zone (12) where it can be cooled through spray water, spray mist or compressed air, and that this cooling is progressively or continuously reduced during the remaining solidification phase after the end of the casting process and completion of the ingot withdrawal.

3. The method according to claim 1 and 2, **characterized in that** the casting ladle (1) and/or the distributing vessel (3) is/are removed immediately after the end of the casting process, the surface of the melt in the ingot mold (4) is covered by a metallurgically active liquid slag layer (7) and is heated by melting a consumable electrode (18) according to the electro-slag method until the entire cross-section of the metal or steel melt has solidified

4. The method according to claim 3, **characterized in that** at the beginning of the electro-slag heating process, the melting rate of the consumable electrode (18) in kg/h is selected to be between 0.5 and 2.5 times the ingot diameter or the side length in case of square ingots and half of the sum of the short side and the long side in case of rectangular shapes in mm, and that during the solidification process, the melting rate is continuously or progressively lowered to 10 to 15 % of the original value until the end of the solidification process.

5. The method according to claims 3 and 4, **characterized in that** in terms of its chemical composition, the consumable electrode (18) used corresponds to the chemical composition of the ingot (6).

6. The method according to any one of claims 3 to 5, **characterized in that** the quantity melted during the solidification corresponds to 2 to 10 % of the total weight of the ingot (6).

7. The method according to claims 1 and 2, **characterized in that** after completion of the regular casting process and completion of the ingot withdrawal, the casting process is continued from the heatable casting ladle (1) or from the heatable tundish (3) or from a distributing vessel with a casting rate reduced by at least the factor 10 and is reduced progressively or continuously until the end of the solidification to 10 % the rate at the start of the makeup casting.

8. The method according to claim 1 or 2, **characterized in that** after completion of the regular casting process and completion of the ingot withdrawal, the casting process is continued with, at the most, the regular casting speed, so that the level of the metal in the ingot mold (4) rises beyond the upper edge of the ingot mold until an additional height of max. 10 % of the ingot length is reached in a ceramic-lined insulated top piece (22) mounted on the ingot mold (4).

9. The method according to claim 8, **characterized in that** the ceramic-lined insulated top piece (22) is additionally heated.

## Revendications

1. Procédé de production de lingots (6) en métal, notamment en acier, ayant des faces de section transversale d'au moins 0,10 m², préférablement de forme ronde mais aussi quadratique ou rectangulaire, en coulant un métal ou acier fondu d'une manière connue en soi, directement d'une poche de coulée (1) ou par l'intermédiaire d'un panier de coulée (3) ayant un chemisage réfractaire, dans une courte lingotière (4) refroidie par l'eau et ouverte vers le bas et en retirant le lingot (6) solidifiant de celle-ci à l'aide d'un outil de retrait (8) déplaçable vers le bas, le processus de coulée étant continué à un taux de coulée fixe correspondant à la section transversale de coulée jusqu'à ce que la longueur désirée ou maximale du lingot déterminée par la hauteur de course de l'outil de retrait (8) est atteinte, et du métal liquide continuant d'être amené après la fin du processus de coulée régulier en une telle quantité qu'au moins la diminution du métal ou acier fondu se produisant pendant la solidification est compensée,
**caractérisé en ce**
**qu'**après la fin du processus de coulée régulier, pendant la phase de coulée d'appoint, en commençant dans la position la plus basse du lingot (6), la poche de métal (5) est agitée par un agitateur (13) électromagnétique qui est déplaçable dans la direction verticale et l'agitateur (13) est déplacé en continu vers la tête du lingot (6) quand la solidification progresse.

2. Procédé selon la revendication 1, **caractérisé en ce que** pendant le processus de coulée, le lingot (6) retiré de la lingotière (4) est guidé à travers une deuxième zone de refroidissement (12), où il peut être refroidi à l'aide de l'eau de pulvérisation, du brouillard de pulvérisation ou de l'air comprimé, et **en ce que** ledit refroidissement est réduit de manière graduelle ou continue pendant la phase de solidification restant après la fin du processus de coulée et l'achèvement du retrait du lingot.

3. Procédé selon les revendications 1 et 2, **caractérisé en ce que** la poche de coulée (1) et/ou le répartiteur (3) est/sont enlevé(es) immédiatement après la fin du processus de coulée, que la surface de la masse fondue dans la lingotière (4) est couverte par une couche de laitier liquide et métallurgiquement active (7) et est chauffée en fondant une électrode (18) consommable selon le procédé sous laitier électroconducteur jusqu'à ce que la section transversale entière du métal ou acier fondu s'est solidifiée.

4. Procédé selon la revendication 3, **caractérisé en ce qu'**au début du processus de chauffage du laitier électroconducteur, le taux de fonte de l'électrode consommable (18) en kg/h est sélectionné de manière à être entre 0,5 et 2,5 fois le diamètre du lingot ou la longueur latérale en cas de lingots quadratiques ou la moitié de la somme du côté court et du côté long en cas de formes rectangulaires en mm, et **en ce que** pendant le processus de solidification, le taux de fonte est abaissé de manière continue ou graduelle à de 10 à 15 % de la valeur originale jusqu'à la fin du processus de solidification.

5. Procédé selon les revendications 3 et 4, **caractérisé en ce que** quant à sa composition chimique, l'électrode consommable (18) utilisée correspond à la composition chimique du lingot (6).

6. Procédé selon l'une quelconque des revendications 3 à 5, **caractérisé en ce que** la quantité fondue pendant la solidification correspond à de 2 à 10 % du poids total du lingot (6).

7. Procédé selon les revendications 1 et 2, **caractérisé en ce qu'**après la fin du processus de coulée régulier et l'achèvement du retrait du lingot, le processus de coulée est continu à un taux de coulée réduit par au moins le facteur 10 à partir de la poche de coulée (1) chauffable ou du panier de coulée (3) chauffable ou d'un répartiteur (21) et est réduit jusqu'à la fin de la solidification de manière graduelle ou continue à 10 % du taux au début de la coulée d'appoint.

8. Procédé selon la revendication 1 ou la revendication 2, **caractérisé en ce qu'**après la fin du processus de coulée régulier et l'achèvement du retrait du lingot, le processus de coulée est continu à au plus la vitesse de coulée régulière de sorte que le niveau du métal dans la lingotière (4) augmente au-delà le bord de la lingotière jusqu'à ce qu'une hauteur additionnelle de 10 % maximale de la longueur du lingot est achevée dans une pièce superposée (22) isolée ayant un chemisage céramique et étant posée sur la lingotière (4).

9. Procédé selon la revendication 8, **caractérisé en ce que** la pièce superposée (22) isolée ayant le chemisage céramique est additionnellement chauffée.
